**Europäisches Patentamt**

**European Patent Office**

**Office européen des brevets**

(19)

(11) Veröffentlichungsnummer: **0 481 400 A2**

## EUROPÄISCHE PATENTANMELDUNG

(12)

(21) Anmeldenummer: **91117482.9**

(22) Anmeldetag: **14.10.91**

(51) Int. Cl.5: **H04J 3/06**

(30) Priorität: **15.10.90 DE 4032651**

(43) Veröffentlichungstag der Anmeldung:
**22.04.92 Patentblatt 92/17**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**
(84) **DE**

(71) Anmelder: **N.V. Philips' Gloeilampenfabrieken**
**Groenewoudseweg 1**
**NL-5621 BA Eindhoven(NL)**
(84) **FR GB**

(72) Erfinder: **Herzberger, Achim**
**Maxtorgraben 37**
**W-8500 Nürnberg 10(DE)**

(74) Vertreter: **Peuckert, Hermann, Dipl.-Ing. et al**
**Philips Patentverwaltung GmbH**
**Wendenstrasse 35 Postfach 10 51 49**
**W-2000 Hamburg 1(DE)**

(54) **Anordnung zur Erzeugung eines Synchronisationsimpulses.**

(57) Es wird eines Anordnung zur Erzeugung eines Synchronisationsimpulses aus dem Rahmenkennungswort eines nach Rahmen strukturierten Binärsignals (1a) beschrieben. Vorausgesetzt wird, daß das Rahmenkennungswort aus der mehrfachen Wiederholung eines ersten Wortes A1 besteht, an die sich mindestens ein zweites Wort A2 anschließt. Die Anordnung enthält einen Demultiplexer (1), eine Speichermatrix (2), eine Dekoderschaltung (6), sowie eine Multiplexanordnung (3). Mit der Dekoderschaltung (6) wird abgefragt, ob das erste Wort A1 in der Speichermatrix (2) gespeichert ist. Eine Adressierlogik (7) transformiert das Abfrageergebnis in eine Binärzahl (7a, 7b), mit der die Multiplexanordnung (3) gesteuert wird. Mit der Multiplexanordnung (3) werden die Bits so umgeordnet, daß sie eine vorgeschriebene Reihenfolge annehmen. In einer zweiten Speichermatrix und einer angeschlossenen Vergleichsschaltung (8) wird festgestellt, ob in Speicherstellen der Matrix (4) vorgestimmte Bits des ersten Wortes A1 und vorbestimmte Bits des zweiten Wortes A2 enthalten sind. Im bejahenden Fall gibt die Vergleichsschaltung (8) den Synchronisationsimpuls (8b) ab.

Fig. 1

Die Erfindung betrifft eine Anordnung zur Erzeugung eines Synchronisationsimpulses mit weiteren im Oberbegriff des Anspruchs 1 genannten Merkmalen.

Eine derartige Schaltungsanordnung ist aus der EP-A2 0 103 163 bekannt. Eine solche Anordnung wird zum Beispiel benötigt, wenn ein nach Rahmen strukturiertes Binärsignal durch einen Demultiplexer in Teilsignale zerlegt werden soll. Insbesondere ist hier und in den unten folgenden Ausführungen an die Zerlegung eines synchonen Transportmoduls STM-16 in vier synchrone Transportmodule STM-4 (vergleiche hierzu die CCITT-Empfehlungsentwürfe G 707, G 708, G 709) gedacht. Das Rahmenkennungswort eines synchronen Transportmoduls STM-16 ist 768 Bit lang, und zwar besteht es aus 48 Wiederholungen eines Wortes A1 mit aus der Bitfolge 11110110, sowie aus sich daran anschließenden achtundvierzig Wiederholungen eines zweiten Wortes A2 mit aus der Bitfolge 00101000.

Die Erzeugung eines Synchronisationsimpulses aus einem solchen Rahmenkennungswort mit der bekannten Schaltungsanordnung würde einen erheblichen Schaltungsaufwand bedeuten. So müßte z.B. die im Oberbegriff des Anspruchs 1 genannte Speichermatrix 771 abfragbare Speicherstellen enthalten.

Der Erfindung liegt daher die Aufgabe zugrunde, eine Schaltungsanordnung der eingangs genannten Art anzugeben, die mit erheblich geringerem Schaltungsaufwand auch Rahmenkennungsworte eines STM-16-Moduls in Synchronisationsimpulse umsetzen kann.

Anhand eines Ausführungsbeispiels und anhand der Figuren soll die Erfindung nun näher erläutert werden.

Es zeigen:

Fig. 1 ein Prinzipschaltbild einer erfindungsgemäßen Anordnung,

Fig. 2 den inneren Aufbau einer Speichermatrix,

Fig. 3 eine Abfrageschaltung und ein Zählwerk, die beide Bestandteil einer Dekoderschaltung sind,

Fig. 4 den inneren Aufbau einer Adressierlogik und einer Fensterschaltung,

Fig. 5 den inneren Aufbau einer Multiplexschaltung,

Fig. 6 den inneren Aufbau einer zweiten Speichermatrix,

Fig. 7 den inneren Aufbau einer Vergleichsschaltung.

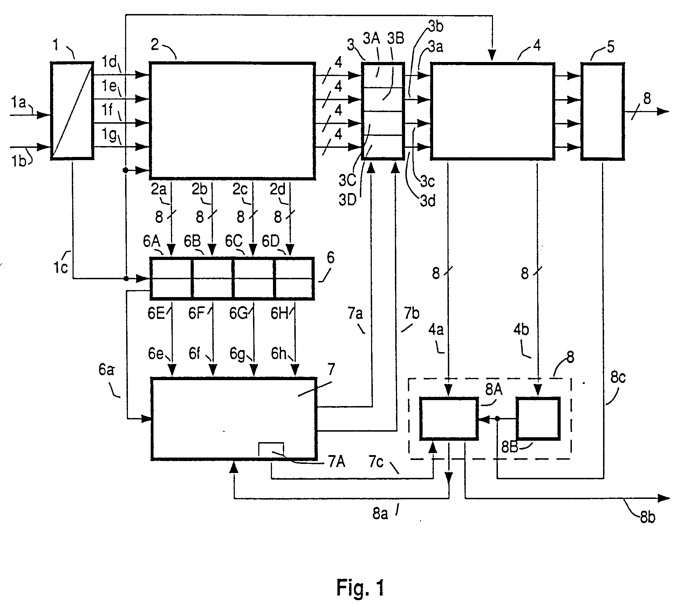

In Fig. 1 wird einem Multiplexer auf einer Leitung 1a ein Binärsignal zugeführt, das aus STM-16-Rahmen aufgebaut ist. Der zugehörige Bittakt erhält der Demultiplexer 1 über eine Leitung 1b. Im folgenden wird keine scharfe Unterscheidung zwischen dem Bezugszeichen für eine Leitung und dem für das Signal gemacht, das auf dieser Leitung übertragen wird. Der Demultiplexer 1 gibt vier (der Parameter n in der Lehre des Anspruchs 1 ist also 4) parallele Bitströme über Leitungen 1d bis 1g an eine Speichermatrix 2 weiter. Gleichzeitig liefert er über Leitungsabschnitte 1c einen Takt, dessen Frequenz ein Viertel des Bittaktes beträgt. Die Signale 1d bis 1g werden mit dem Takt 1c durch vier Schieberegister geschoben, die die erste Speichermatrix 2 enthält. Die einzelnen Schieberegister bestehen aus Flip-Flops, wie weiter unten noch deutlicher werden wird. Insgesamt enthält die Speichermatrix 2 elf Flip-Flops. Die Q- oder die $\overline{Q}$-Ausgänge (der negierte Ausgang ist hier mit einem Strich unter dem Q gekennzeichnet) von jeweils acht dieser Flip-Flops werden über achtadrige Leitungen 2a bis 2d einer Dekoderschaltung 6 zugeführt.

Die Dekoderschaltung 6 besteht im wesentlichen aus vier Abfrageeinheiten 6A bis 6D mit jeweils acht Eingängen und nachgeschalteten Zählwerken 6E bis 6H. Liegt am Ausgang eines dieser Abfrageeinheiten eine binäre Eins an, so wird der Stand des nachgeschalteten Zählwerkes um eine Einheit erhöht.

Hat eines der Zählwerke 6E bis 6H den Stand Vier erreicht, gibt es auf der zugehörigen Ausgangsleitung 6e bis 6h einen Impuls ab. Eine Adressierlogik 7 setzt diesen Impuls in eine Dualzahl um, die auf Leitungen 7a, 7b an eine Multiplexschaltung 3 übertragen wird. Diese Dualzahl steuert vier Multiplexer 3A bis 3D, deren Eingänge mit den Ausgängen bestimmter Speicherstellen der Speichermatrix 2 verbunden sind. Dadurch - wie weiter unten näher erläutert wird - werden die Bits umsortiert, und zwar so, daß das erste Bit eines Wortes A1 auf einer Leitung 3a, das zweite Bit auf einer Leitung 3b usw. und das fünfte Bit wieder auf der Leitung 3a an eine zweite Speichermatrix 4 übertragen wird.

Die zweite Speichermatrix 4 besteht ebenfalls aus vier Schieberegistern. Jedes Schieberegister hat nur zwei Stufen, so daß die Speichermatrix 4 insgesamt acht Speicherstellen (Flip-Flops) enthält. Die Q-Ausgänge der acht Flip-Flops sind einmal über eine achtadrige Leitung 4a und ein weiteresmal über eine achtadrige Leitung 4b mit einer Vergleichsschaltung 8 verbunden. Durch die Funktionseinheit 8B der Vergleichsschaltung 8 wird geprüft, ob die ersten vier Bits des Wortes A1 in der zweiten Stufe und die letzten vier Bits in der ersten Stufe der vier Schieberegister enthalten sind. Im bejahenden Fall wird ein bytesynchroner Takt 8c an die Funktionseinheit 8A übertragen. Diese Einheit prüft, ob sich die letzten vier Bits eines A1-Wortes in der zweiten Stufe der Schieberegister und die ersten vier Bit eines A2-Wortes in der ersten Stufe der vier Schieberegister befinden. Mit dem Bytetakt 8c von der Einheit 8B gibt die Einheit 8A auf einer Leitung 8b den Synchronisationsimpuls ab, falls die Bedingung, auf die durch die Einheit 8A geprüft wird, erfüllt ist. Die Ausgänge der vier Schieberegister der Speichermatrix 4 führen an einen Serien-Parallel-Wandler 5, der vier parallele in acht parallele Bits - also Bytes - wandelt und nachgeschalteten, nicht gezeigten Einheiten zuführt. Der Wandler 5 erhält den notwendigen Bytetakt über eine Leitung 8c.

Um die Sicherheit für die richtige Abgabe eines Synchronisationsimpulses zu erhöhen, ist eine Fensterschaltung 7A vorgesehen, die über eine Leitung 7c einen Impuls an die Einheit 8A überträgt. Während dieses Impulses wird die Abgabe eines Synchronisationsimpulses möglich. Die Fensterschaltung ZA gibt den Impuls nur dann ab, wenn eines der Zählwerke 6E bis 6H in den zurückliegenden acht Zähltakten einen Impuls an die Adressierlogik 7 übertragen hat.

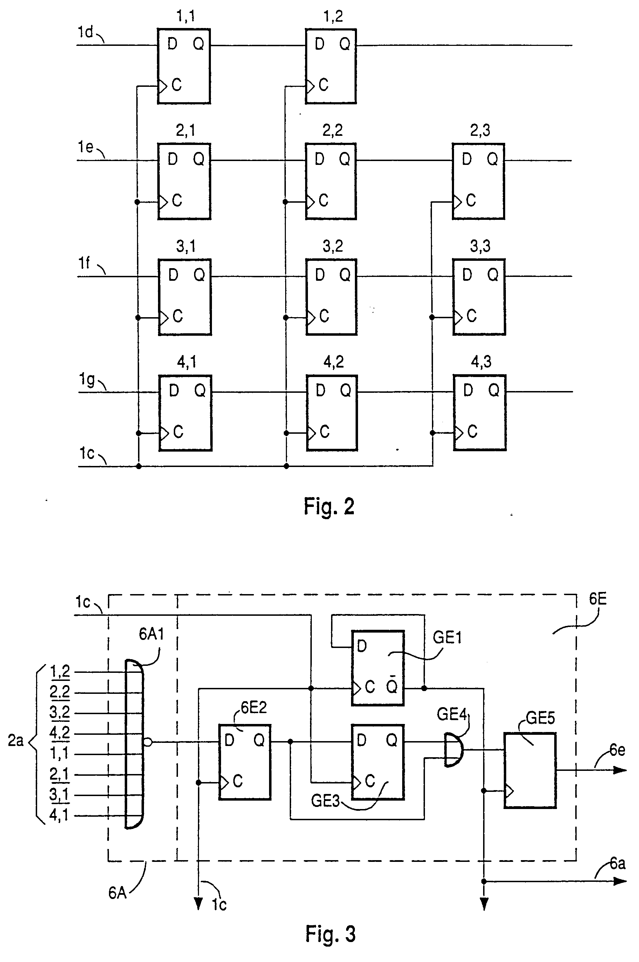

Fig. 2 zeigt den inneren Aufbau der Speichermatrix 2. Die Schieberegister der Speichermatrix 2 bestehen aus den hintereinander geschalteten Flip-Flops
1,1; 1,2
2,1; 2,2; 2,3
3,1; 3,2; 3,3
4,1; 4,2; 4,3.

Die vier seriellen Datenströme werden den Schieberegistern über die Leitungen 1d bis 1g zugeführt, der erforderliche Takt über die Leitung 1c. Das aus acht Bits bestehende Wort A1 kann nun insgesamt auf vier verschiedene Arten durch die Schieberegister geschoben werden: entweder ist während einer Taktperiode des Taktes 1c das erste Bit des Wortes A1 im Flip-Flop 2,3, das zweite Bit im Flip-Flop 3,3, das dritte Bit im Flip-Flop 4,3, das vierte Bit im Flip-Flop 1,2 usw. gespeichert oder die Folge dieser Bits beginnt in der gleichen Reihenfolge beim Flip-Flop 3,3 bzw. 4,3 oder 1,2. Welcher dieser Speicherzustände tatsächlich vorliegt, wird u.a. durch die Dekodierschaltung 6 ermittelt.

Fig. 3 zeigt einen Teil der Dekodierschaltung 6 im Detail, nämlich die Abfrageeinheit 6A und das Zählwerk 6E; Die anderen Bausteine der Dekodierschaltung 6 sind - bis auf ein Flip-Flop 6E1 zur Taktuntersetzung - mit den gezeigten Einheiten 6A und 6E identisch.

Die Abfrageeinheit 6A besteht aus einem NOR-Gatter 6A1 mit acht Eingängen, die entweder mit dem Q-Ausgang oder dem $\overline{Q}$-Ausgang der Flip-Flops der ersten Speichermatrix 2 verbunden sind. Mit diesem Gatter 6A1 wird abgefragt, ob das Wort A1 in der letzten der oben aufgezählten Positionen gespeichert ist oder nicht. Die anderen Positionen werden von den restlichen Einheiten der Dekodierschaltung 6 abgefragt. Die Ziffern an den Eingängen des Gatters 6A1 geben an, mit welchen Flip-Flops sie verbunden sind. Sind die Ziffern nicht unterstrichen, ist der Q-Ausgang des betreffenden Flip-Flops gemeint, anderenfalls der $\overline{Q}$-Ausgang. Nur dann, wenn eine Bitfolge wie die des Wortes A1 in den Flip-Flops gespeichert ist, nimmt die Ausgangsvariable des Gatters 6A1 den Wert 1 an.

Dieser Wert wird an das Zählwerk 6E übergeben und mit dem Takt 1c in ein Flip-Flop 6E2 übernommen. Zur Verlängerung des mit dieser Eins verbundenen Impulses dient ein weiteres Flip-Flop 6E2 und ein ODER-Gatter 6E4. Die beiden Eingänge des Gatters 6E4 sind mit dem Q-Ausgang der beiden Flip-Flops 6E2 und 6E3 verbunden. Der Ausgang des Gatters 6E4 ist mit dem Dateneingang einer Zählschaltung 6E5 verbunden. Mit einem Takt 6a, der aus dem Takt 1c durch ein Teiler-Flip-Flop 6E1 erhalten wird, wird der verlängerte Impuls in der ersten oder zweiten Hälfte abgetaktet.

Die Zählschaltung 6E5 besteht aus einem nicht näher gezeigten vierstufigen Schieberegister und einem UND-Gatter, dessen Ausgangsvariabel nur dann den Wert 1 annimmt und ihn auf der Leitung 6e weiterleitet, wenn in allen vier Stufen eine binäre Eins gespeichert ist.

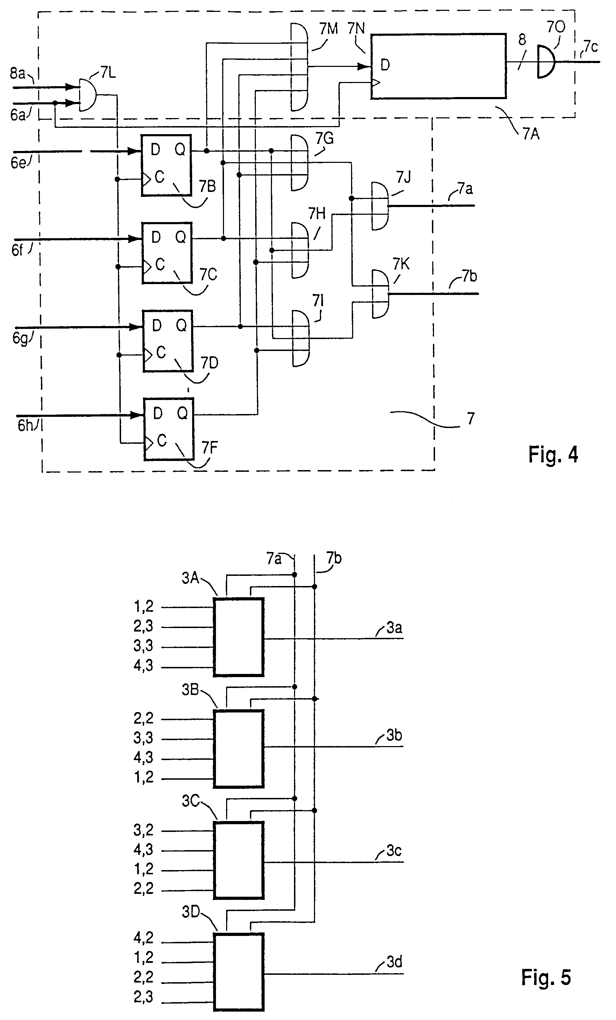

Einzelheiten der Adressierlogik 7 und der als Teil von ihr angesehenen Fensterschaltung 7A zeigt Fig. 4. Mit dem Takt 6a werden die von den Zählwerken abgegebenen Impulse über die Leitungen 6e bis 6h in vier Flip-Flops 7B bis 7F übernommen. Die Übernahme durch den Takt 6a erfolgt nur, wenn ein Gatter 7L durch einen Impuls 6a geöffnet wird. Wann dieser Impuls zur Öffnung des Gatters 7L abgegeben wird, ergibt sich aus den weiter unten gemachten Ausführungen.

Die Q-Ausgänge der vier Flip-Flops 7B bis 7F sind durch fünf Gatter 7G bis 7K derart miteinander verknüpft, daß jede der fünf möglichen Zustände an den Q-Ausgängen, nämlich (1000), (0100), (0010), (0001) und (0000), eindeutig auf eine zweistellige Dualzahl abgebildet wird. So wird der Zustand (1000) z.B. auf die Dualzahl 11 abgebildet, d.h. auf den Leitungen 7a, 7b wird jeweils eine Eins übertragen. Die Zustände (0000) und (0001) werden beide auf die Dualzahl 00 abgebildet.

Die Fensterschaltung 7A enthält ein ODER-Gatter 7M, dessen vier Eingänge mit den Q-Ausgängen der vier Flip-Flops 7B bis 7F verbunden sind. Die Ausgangsvariable des Gatters 7M nimmt also dann nur den Wert 1 für eine Periode des Taktes 6a an, wenn eines der Zählwerke 6E bis 6H einen Impuls abgegeben hat. Die am Ausgang des Gatters 7M auftretenden Binärwerte werden mit dem Takt 6a durch ein achtstufiges Schieberegister 7N geschoben. Die Ausgänge der acht Stufen des Schieberegisters 7N sind mit den acht Eingängen eines ODER-Gatters 70 verbunden, dessen Ausgangsleitung ein Signal zur Vergleichsschaltung 8 weiterleitet, die mit diesem Signal die Abgabe eines Synchronisationsimpulses verhindert. Verhindert wird die Abgabe nur, wenn in allen Stufen des Schieberegisters 7N eine binäre Null gespeichert ist. Anders ausgedrückt: die Abgabe wird genau dann verhindert, wenn in den acht zurückliegenden Taktperioden des Schiebetaktes 6a keines der Zählwerke 6E bis 6H einen Impuls abgegeben hat. Durch diese Bedingungen werden fehlerhafte Synchronisationsimpulse sehr unwahrscheinlich.

Mit den Dualzahlen auf den Leitungen 7a und 7b wird die Multiplexschaltung nach Fig. 5 gesteuert. Die Schaltung besteht aus den vier 1:4-Multiplexern 3A, 3B, 3C und 3D. Durch die Dualzahl am Adresseingang der Multiplexer wird der durch Adresse bezeichnete Eingang mit dem Ausgang des Multiplexers verbunden. Die Eingänge der Multiplexer 3A bis 3B mit den Q-Ausgängen bestimmter Flip-Flops der Speichermatrix 2 verbunden. Um welche Flip-Flops es sich handelt, ist wiederum der Bezifferung an den Eingängen der Multiplexer 3A bis 3D zu entnehmen. Die Auswahl der Flip-Flops und die Adressen auf den Leitungen 7a und 7b sind so aufeinander abgestimmt, daß auf den Leitungen 3a bis 3d die ersten oder die letzten vier Bits des Wortes A1 übertragen werden, und zwar in der gleichen Reihenfolge in der auch die Leitungen 3a bis 3d durchnumeriert sind. Die Bits der Worte A1 sind gewissermaßen bytehalbe vorsortiert.

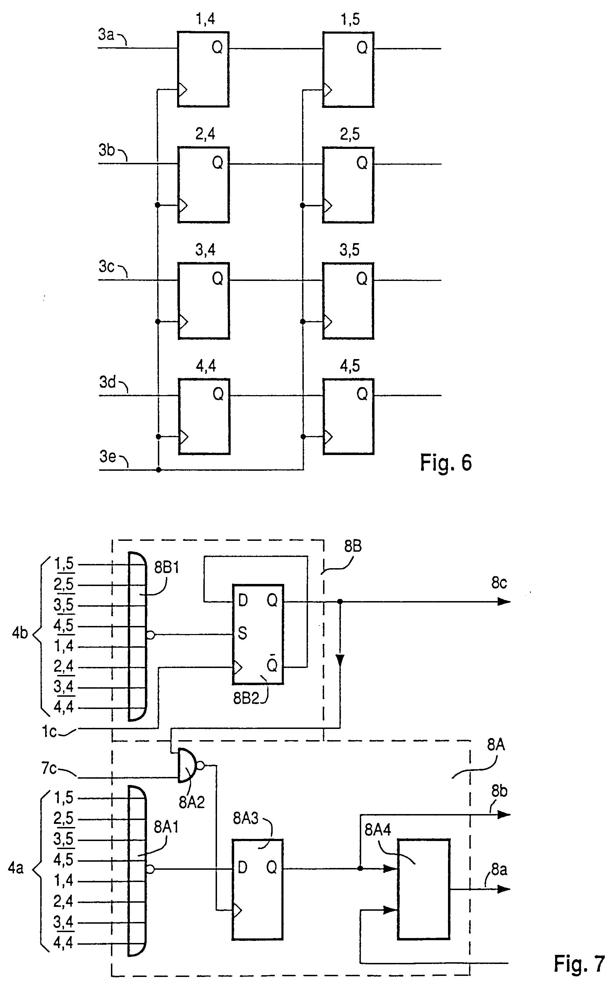

In diesem Zustand werden sie einer zweiten Speichermatrix 4 zwischengespeichert. Eine solche Speichermatrix zeigt Fig. 6; Sie besteht aus vier zweistufigen Schieberegistern, die alle mit dem Takt 1c getaktet werden. Die einzelnen Flip-Flops sind wieder mit zweiziffrigen Bezugszeichen versehen, nämlich 1,4; 1,5 bis 4,4; 4,5. Die Ausgänge der Schieberegister sind mit dem nachgeschalteten Serien-Parallel-Wandler 5 verbunden.

Die Vergleichsschaltung 8 mit ihren Teilschaltungen 8A und 8B zeigt Fig. 7. Die Teilschaltung 8B enthält ein NOR-Gatter 8B1, dessen acht Eingänge mit den Q- oder Q̄-Ausgänge der Flip-Flops der Speichermatrix 4 verbunden sind. Wiederum gilt, daß wenn ein Bezugszeichen am Eingang des Gatters 8B1 unterstrichen ist, dieser Eingang mit dem Q̄-Ausgang des entsprechenden Flip-Flops verbunden ist, anderenfalls mit dem Q-Ausgang.

Die Ausgangsvariable des Gatters 8B1 nimmt den Wert Eins an, wenn das erste Bit des Wortes A1 im Flip-Flop 1,5, das zweite im Flip-Flop 3,5 usw. und schließlich das achte Bit im Flip-Flop 4,4 gespeichert ist. Mit dieser Eins wird ein Flip-Flop 8B2 gesetzt, das den Takt 1c halbiert. Das Ergebnis ist ein Bytetakt 8c, der auf die Bytes des STM-16-Rahmens synchronisiert ist.

Der Bytetakt 8c wird der Teilschaltung 8A zugeführt, in der er ein NAND-Gatter 8A2 durchläuft.

Das Gatter 8A2 kann durch das Signal 7c der Fensterschaltung 7A gesperrt werden. Die Folge einer Sperrung ist, daß ein Flip-Flop 8A3 den vor dem Sperrimpuls gespeicherten Wert beibehält und keinen neuen Wert von einem NOR-Gatter 8A1 an seinen Q-Ausgang übernimmt.

Mit dem Gatter 8A1 wird geprüft, ob die zweite Hälfte des Wortes A1 in den Flip-Flops 1,5; 2,5; 3,5 und 4,5 der Speichermatrix 4 gespeichert ist und die erste Hälfte des Wortes A2 in den Flip-Flops 1,4; 2,4; 3,4 und 4,4. Für die acht Eingänge und deren Bezugszeichen gilt das gleiche wie für das Gatter 8B1. Der Übergang von einem Wort A1 zu einem Wort A2 tritt nur einmal in einem STM-16-Rahmen auf, so daß - falls keine anderen Umstände das verhindern - jedesmal zu einem bestimmten Zeitpunkt eines STM-16-Rahmens das Gatter 8A1 einen Impuls erzeugt.

Um Spikes zu beseitigen, wird dieser Impuls (als logische Eins) in das Flip-Flop 8A3 übernommen und über die Leitung 8b als Synchronisationsimpuls zur weiteren Verwendung weitergeleitet. Gleichzeitig wird er an den Setzeingang eines RS-Flip-Flops 8A4 gelegt, mit dem das Signal 8a zum Sperren des Gatters 7L in Fig. 4 erzeugt wird. Damit ist die Abgabe eines neuen Synchronisationsimpulses zunächst verhindert, bis über eine Leitung an den Rücksetzeingang des Flip-Flops 8A4 ein neuer Synchronisationsimpuls angefordert wird.

**Patentansprüche**

1. Anordnung zur Erzeugung eines Synchronisationsimpulses aus dem Rahmenkennungswort eines nach Rahmen strukturierten Binärsignals (1a), wobei das Rahmenkennungswort aus der mehrfachen Wiederholung eines ersten Wortes A1 besteht, an die sich mindestens ein zweites Wort A2 anschließt, mit

    a) einem Demultiplexer (1), der das Binärsignal (1a) in n parallele Teilsignale (1d bis 1g) zerlegt -

    b) einer Speichermatrix (2) in der die n parallelen Teilsignale (1d bis 1g) synchron durch jeweils ein Schieberegister geschoben werden -

    c) einer Decoderschaltung (6), mit der n Gruppen von Speicherstellen der ersten Speichermatrix (2) abgefragt werden -

    d) einer Multiplexanordnung (3), die n Multiplexer enthält, deren Eingänge mit den Ausgängen von n Speicherstellen der Speichermatrix (2) verbunden sind -

    gekennzeichnet durch folgende Merkmale:

    e) die positiven Ergebnisse der Abfrage werden durch die Decoderschaltung (6) für jede Gruppe durch jeweils ein Zählwerk (6E bis 6H) aufsummiert -

f) bei Überschreiten eines vorbestimmten Standes eines Zählwerkes (6E bis 6H) wird ein Impuls von dem Zählwerk an eine Adressierlogik (7) übertragen -

g) die Adressierlogik (7) gibt durch eine Binärzahl an, von welchem der Zählwerke sie einen Impuls erhalten hat und leitet diese Binärzahl (7a, 7b) zur Steuerung an die Multiplexanordnung (3) weiter -

h) eine zweite Speichermatrix (4), deren n Eingänge mit den Ausgängen der n Multiplexer (3) verbunden sind -

i) eine Vergleichsschaltung (8) mit der festgestellt wird, ob in Speicherstellen der zweiten Speichermatrix (4) vorbestimmte Bits des ersten Wortes A1 und vorbestimmte Bits des zweiten Wortes A2 enthalten sind, und die im bejahenden Fall den Synchronisationsimpuls (8b) abgibt.

2. Anordnung nach Anspruch 1,
dadurch gekennzeichnet,
daß eine Fensterschaltung (7A) vorgesehen ist, die die Abgabe des Synchronisationsimpulses (8b) unterbindet, wenn nicht in einem vorhergehenden Zeitintervall vorbestimmter Länge eines der Zählwerke (6A bis 6D) einen Impuls an die Adressierlogik (7) übertragen hat.

Fig. 1

Fig. 2

Fig. 3

EP 0 481 400 A2

Fig. 4

Fig. 5

Fig. 6

Fig. 7